# EUROPEAN PATENT APPLICATION

(11) **EP 4 667 070 A1**
(43) Date of publication of application: **24.12.2025**
(21) Application number: 25176423.9
(22) Date of filing: 14.05.2025
(51) Int. Cl.: A63F 13/25, A63F 13/5372, A63F 13/837, H04N 21/431, H04N 21/44

(54) **DISPLAY DEVICE, ELECTRONIC DEVICE, AND METHOD FOR ADJUSTING DISPLAY CONTENT**

(30) Priority: 30.05.2024 TW 113119922
(71) Applicant: Giga-Byte Technology Co., Ltd., New Taipei City 231 (TW)
(72) Inventor: CHANG, Kuei-Shan, 231 New Taipei City (TW); CHOU, Shih-Chieh, 231 New Taipei City (TW); YANG, Bo, 231 New Taipei City (TW); DING, Shengchun, 231 New Taipei City (TW); LI, Xiang, 231 New Taipei City (TW); LI, Xiaocheng, 231 New Taipei City (TW); LIU, Bin, 231 New Taipei City (TW); QU, Guangsheng, 231 New Taipei City (TW); LIOU, Yu Cheng, 231 New Taipei City (TW); LIU, Chia En, 231 New Taipei City (TW); HUANG, Hao Kai, 231 New Taipei City (TW)
(74) Representative: Becker, Eberhard

(57) **Abstract**

A display device (100), an electronic device (700), and a method for adjusting a display content are provided. The method includes the following steps. An image signal is received. An object detection is performed on the image signal to obtain an identification result. A default region (300) of an on-screen display of the display device (100) corresponding to the image signal is updated according to the identification result. An output image including the on-screen display is generated.

## Description

### BACKGROUND

### Technical Field

The disclosure relates to a display technology, and in particular to a display device, an electronic device, and a method for adjusting a display content.

### Description of Related Art

In shooting games, players may use scopes obtained in the game to enlarge the scale of shooting targets to assist with aiming firearms. However, high-magnification scopes are usually difficult to obtain in the game. Players often may only use low-magnification scopes, making it difficult to successfully shoot distant targets. On the other hand, some firearms in the game do not have a corresponding crosshair. When a virtual character does not use a scope for aiming, the lack of a crosshair prevents the player from aiming at targets in real time.

### SUMMARY

A display device, an electronic device, and a method for adjusting a display content are provided to assist players in shooting games when aiming at targets.

A display device includes a display module, a bridge chip, and a display controller. The bridge chip receives an image signal. A processor is electrically connected to the bridge chip. The display controller is electrically connected to the processor and the display module. The processor performs an object detection on the image signal to obtain an identification result. The display controller updates a default region of an on-screen display corresponding to the image signal according to the identification result and generates an output image including the on-screen display through the display module.

In an embodiment of the disclosure, the processor is an artificial intelligence chip.

In an embodiment of the disclosure, the identification result is that the processor determines that a virtual character in the image signal enters an aiming down sights mode. The display controller displays a partially zoom-in image of the aiming down sights mode in the default region.

In an embodiment of the disclosure, a zoom-in level of the partially zoom-in image in the default region by the display controller is inversely proportional to a zoom-in level of the aiming down sights mode in the image signal.

In an embodiment of the disclosure, the identification result is that a first virtual prop or a second virtual prop of the image signal is enabled. In response to determining that the first virtual prop is enabled, the display controller adjusts the default region to a first scale. In response to determining that the second virtual prop is enabled, the display controller adjusts the default region to a second scale different from the first scale.

In an embodiment of the disclosure, the display controller enables or disables a crosshair in the default region according to the identification result.

In an embodiment of the disclosure, the identification result is whether a virtual prop of the image signal is enabled. In response to determining that the virtual prop is enabled, the display controller enables or disables the crosshair.

In an embodiment of the disclosure, the identification result is determining that a virtual character in the image signal enters a hip firing mode or the aiming down sights mode. In response to determining that the virtual character enters the hip firing mode, the display controller enables the crosshair.

In an embodiment of the disclosure, in response to determining that the virtual character enters the aiming down sights mode, the display controller disables the crosshair.

In an embodiment of the disclosure, the processor performs the object detection using a region-based convolutional neural network. The region-based convolutional neural network includes a region proposal network.

In an embodiment of the disclosure, the identification result is a ballistic trajectory. The display controller displays an image corresponding to the ballistic trajectory in the default region of the on-screen display. A color of the image is different from a color of the ballistic trajectory.

In an embodiment of the disclosure, the identification result is a bomb-setting image. The display controller displays a countdown image in the default region.

An electronic device for adjusting a display content of a display device is provided. The electronic device includes a transceiver and a processor. The processor is coupled to the transceiver and configured to: receive an image signal through the transceiver; perform an object detection on the image signal to obtain an identification result; update a default region of an on-screen display of the display device corresponding to the image signal according to the identification result; and generate an output image including the on-screen display.

A method for adjusting a display content of a display device is provided. The method includes the following steps. An image signal is received. An object detection is performed on the image signal to obtain an identification result. A default region of an on-screen display of the display device corresponding to the image signal is updated according to the identification result. An output image including the on-screen display is generated.

Based on the above, the display device or the electronic device of the disclosure may increase a magnification level of a scope or display a crosshair for players in shooting games.

### BRIEF DESCRIPTION OF THE DRAWINGS

FIG. 1 illustrates a schematic diagram of a display device according to an embodiment of the disclosure.
FIG. 2 illustrates a flowchart of a method applicable to the display device according to an embodiment of the disclosure.
FIGs. 3A and 3B illustrate schematic diagrams of enabling a crosshair according to an embodiment of the disclosure.
FIGs. 4A and 4B illustrate schematic diagrams of a partially zoom-in image according to an embodiment of the disclosure.
FIGs. 5A and 5B illustrate schematic diagrams of a ballistic trajectory according to an embodiment of the disclosure.
FIG. 6 illustrates a schematic diagram of a bomb-setting image according to an embodiment of the disclosure.
FIG. 7 illustrates a schematic diagram of an electronic device for adjusting a display content according to an embodiment of the disclosure.
FIG. 8 illustrates a flowchart of a method applicable to the electronic device according to an embodiment of the disclosure.
FIG. 9 illustrates a flowchart of a method for adjusting a display content according to an embodiment of the disclosure.

### DESCRIPTION OF THE EMBODIMENTS

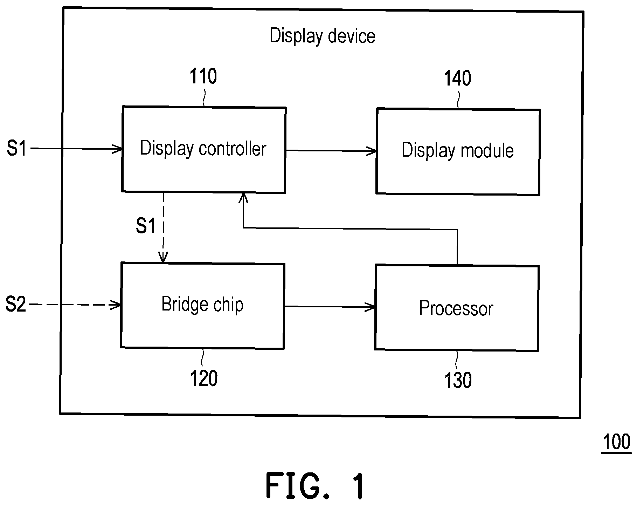

FIG. 1 illustrates a schematic diagram of a display device 100 for adjusting a display content according to an embodiment of the disclosure. A player may enable or disable various functions provided by the display device 100 through an on-screen display (OSD) provided by the display device 100. The display device 100 may include a display controller 110, a bridge chip 120, a processor 130, and a display module 140. The display controller 110 is, for example, a scaler. The processor 130 is, for example, an artificial intelligence chip.

The display controller 110 or the processor 130 is, for example, a central processing unit (CPU), or another programmable general-purpose or special-purpose micro control unit (MCU), microprocessor, digital signal processor (DSP), programmable controller, application-specific integrated circuit (ASIC), graphics processing unit (GPU), image signal processor (ISP), image processing unit (IPU), arithmetic logic unit (ALU), complex programmable logic device (CPLD), field-programmable gate array (FPGA), or another similar element, or a combination of the above elements. The display controller 110 may be electrically connected to the processor 130 and the display module 140. In an embodiment, the display controller 110 may be further electrically connected to the bridge chip 120. The display controller 110 may be configured to control the bridge chip 120, the processor 130, or the display module 140.

The display module 140 may include a liquid-crystal display panel, a light-emitting diode (LED) display panel, a vacuum fluorescent display panel, a plasma display panel (PDP), an organic light-emitting diode (OLED) display panel, or a field-emission display panel.

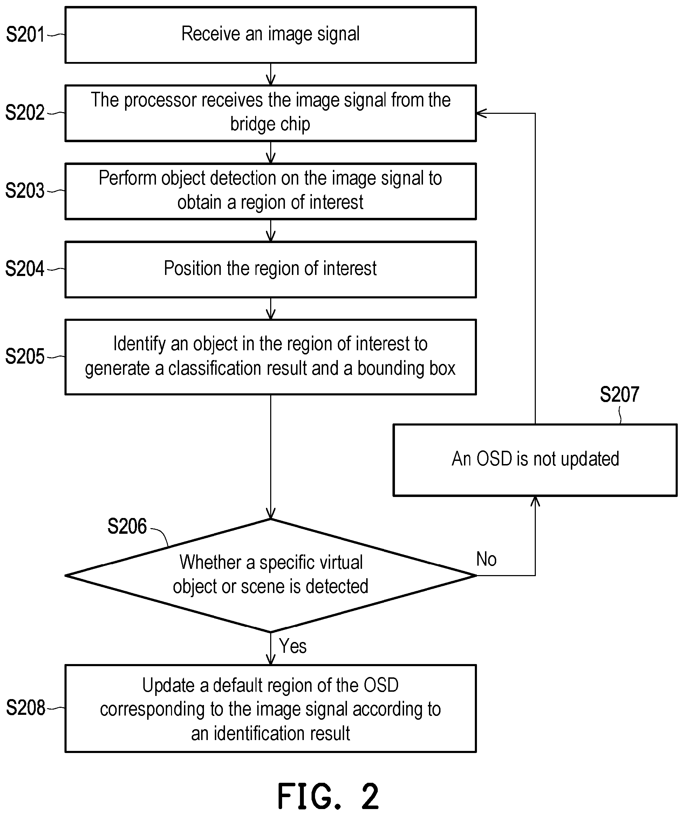

FIG. 2 illustrates a flowchart of a method applicable to the display device 100 according to an embodiment of the disclosure. In step S201, the bridge chip 120 may receive an image signal. The image signal includes, for example, game graphics of a game application. Specifically, the bridge chip 120 is, for example, an integrated circuit. The display device 100 may be communicatively connected to an external device running the game application, such as a personal computer or a game console. The bridge chip 120 may receive the image signal from the external device.

In an embodiment, the bridge chip 120 may have a communication interface. The bridge chip 120 may be communicatively connected to the external device through the communication interface to directly receive the image signal from the external device, as shown by a signal S2 in FIG. 1. The communication interface of the bridge chip 120 may support communication protocols such as universal serial bus (USB), high-definition multimedia interface (HDMI), or DisplayPort (DP).

In an embodiment, the display controller 110 may have a communication interface. The display controller 110 may be communicatively connected to the external device through the communication interface to receive the image signal from the external device, as shown by a signal S1 in FIG. 1. The communication interface of the display controller 110 may support communication protocols such as USB, HDMI, or DP. The display controller 110 may forward the image signal to the bridge chip 120 through a DP out function of an output port. That is, the bridge chip 120 may indirectly receive the image signal from the external device through the display controller 110.

In step S202, the processor 130 may receive the image signal from the bridge chip 120.

In steps S203 to S205, the processor 130 may perform an object detection on the game graphics using a machine learning model to obtain an identification result. The machine learning model used by the processor 130 includes, for example, a region-based convolutional neural network (R-CNN).

Specifically, in step S203, the processor 130 may perform an object detection on the image signal to obtain one or more regions of interest (ROI). The regions of interest may include, for example, virtual props in the game application or the point of view (POV) when a virtual character aims at a target using a scope. In an embodiment, the processor 130 may generate one or more regions of interest through a region proposal network (RPN) included in the region-based convolutional neural network.

In step S204, the processor 130 may position the regions of interest to obtain position information of the regions of interest, such as coordinates.

In step S205, the processor 130 may identify objects in the regions of interest to generate an identification result that includes a classification result of the objects and a bounding box. The processor 130 may transmit the identification result to the display controller 110.

In step S206, the display controller 110 may determine whether a specific virtual object or scene is detected according to the identification result. If the display controller 110 determines that a specific virtual object or scene is detected, then in step S208, the display controller 110 may update a default region of the OSD corresponding to the image signal according to the identification result. The display controller 110 may generate an output image through the display module 140, where the output image may include the image signal (or a game graphic corresponding to the image signal) and a graphical user interface (GUI) of the OSD in the default region overlaid on the image signal (or the game graphic).

For example, the display controller 110 may provide a player with functions such as adjusting the magnification level of a scope, enabling a crosshair, highlighting a ballistic trajectory, or displaying a countdown image through the OSD. On the other hand, if the display controller 110 determines that a specific virtual object or scene is not detected, then in step S207, the display controller 110 may not update the OSD or may disable a function that the display device 100 is providing to the player.

In an embodiment, the display controller 110 may determine whether a specific virtual prop (e.g., a sniper rifle) of the image signal (or game application) is enabled according to the identification result. For example, if a player controls a virtual character holding the specific virtual prop, the display controller 110 may determine that the specific virtual prop is enabled. If the virtual character is not holding the specific virtual prop, the display controller 110 may determine that the specific virtual prop is disabled. If the display controller 110 determines that the specific virtual prop is enabled, the display controller 110 may enable or disable a crosshair of the specific virtual prop and update the OSD accordingly. Accordingly, if the game application does not provide a crosshair in the game graphics when the virtual character holds the specific virtual prop, the display controller 110 may provide a crosshair to the player on the game graphics through the OSD to assist the player in aiming at a target.

To determine whether the virtual character is holding the virtual prop, training data of the machine learning model used by the processor 130 may include image signals of the virtual character holding or not holding the specific virtual prop and labels corresponding to the specific virtual prop. The labels may indicate whether the virtual prop is enabled or indicate a type of the enabled virtual prop. The processor 130 may train the machine learning model using the labeled training data.

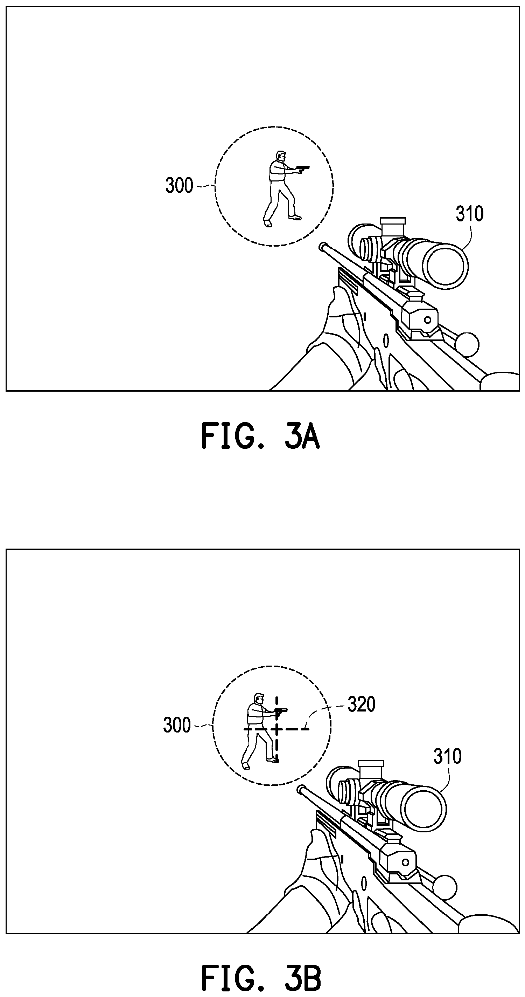

In an embodiment, the display controller 110 may detect a default region of the image signal (or game graphics) to determine whether the default region includes a crosshair corresponding to the virtual prop held by the virtual character. If the default region does not include a crosshair corresponding to the virtual prop, the display controller 110 may enable the default region of the OSD corresponding to the image signal according to the identification result. The display controller 110 may overlay a crosshair provided by the OSD on the image in the default region. If the default region includes a crosshair corresponding to the virtual prop (i.e., a crosshair provided by the game application in the game graphics), the display controller 110 may disable the crosshair provided by the OSD of the display device 100 according to the identification result, keeping only the crosshair provided by the game application. FIGs. 3A and 3B illustrate schematic diagrams of enabling a crosshair according to an embodiment of the disclosure. In FIG. 3A, the display controller 110 may determine, according to the identification result, that a default region 300 of the image signal does not include a crosshair (i.e., a virtual prop 310 does not have a corresponding crosshair). Accordingly, in FIG. 3B, the display controller 110 may provide the player with a crosshair 320 through the OSD to assist the player in aiming at a target using the virtual prop 310.

To determine whether the image in the default region of the image signal includes a crosshair, training data of the machine learning model used by the processor 130 may include image signals (e.g., images in the default region of the image signal) and labels corresponding to the image signals. The labels may be used to indicate whether the image signal includes a crosshair. The processor 130 may train the machine learning model using the labeled training data.

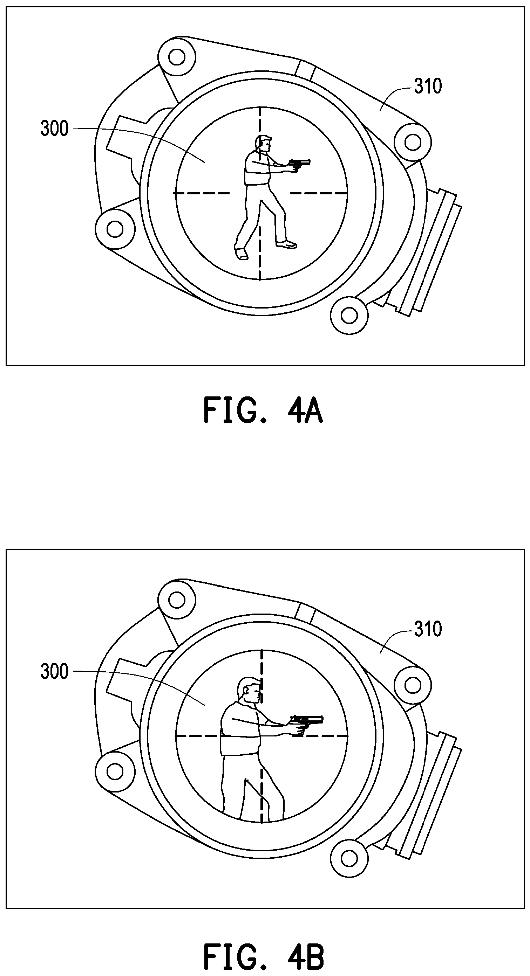

In an embodiment, the display controller 110 may determine whether the virtual character enters a hip firing mode or an aiming down sights (ADS) mode according to the identification result. When the virtual character does not aim using an aiming device or scope provided by the game application, the scale of the image in the default region of the image signal (or at least a portion of the game graphics) may not be magnified by the game application. Accordingly, the display controller 110 may determine that the virtual character has entered the hip firing mode. When the virtual character enters the hip firing mode, the display controller 110 may enable a crosshair provided by the OSD of the display device 100 (e.g., the crosshair 320). FIGs. 3A, 3B, 5A, 5B, or 6 illustrate examples of the point of view of the virtual character entering the hip firing mode. On the other hand, when the virtual character aims using an aiming device or scope provided by the game application, the scale of the image in the default region of the game graphics (or at least a portion of the game graphics) may be magnified by the game application. Accordingly, the display controller 110 may determine that the virtual character has entered the aiming down sights mode. When the virtual character enters the aiming down sights mode, the display controller 110 may disable the crosshair provided by the OSD of the display device 100. FIG. 4A or FIG. 4B illustrates an example of the point of view of the virtual character entering the aiming down sights mode.

Taking FIGs. 3B and 4A as examples, FIG. 3B illustrates game graphics when the virtual character holds the virtual prop 310 and enters the hip firing mode, while FIG. 4A illustrates game graphics when the virtual character holds the virtual prop 310 and enters the aiming down sights mode. In FIG. 3B, since the scale of the image in the default region 300 is not magnified by the game application, the display controller 110 may determine that the virtual character has entered the hip firing mode and may enable the crosshair 320. In FIG. 4A, since the scale of the image in the default region 300 is magnified by the game application, the display controller 110 may determine that the virtual character has entered the aiming down sights mode. Since the game application has already provided a default crosshair in the game graphics when the virtual character is in the aiming down sights mode, the display controller 110 may disable the crosshair 320 provided by the OSD of the display device 100.

In an embodiment, the display controller 110 may adjust the scale of the image in the default region of the image signal using the OSD according to the identification result. If the scale of the image in the default region is magnified by the game application, the display controller 110 may determine that the virtual character has entered the aiming down sights mode. Accordingly, the display controller 110 may display a partially zoom-in image of the aiming down sights mode in the default region using the OSD according to the identification result. For example, the display controller 110 may capture the image in the default region that has been magnified by the game application, further magnify the scale of the captured image, and overlay the further magnified image in the default region through the OSD. That is, the display controller 110 may perform a zoom-in function on the default region.

FIGs. 4A and 4B illustrate schematic diagrams of a partially zoom-in image according to an embodiment of the disclosure. In FIG. 4A, the player controls the virtual character to enter the aiming down sights mode. The game application magnifies the scale of the image in the default region 300. However, the degree of magnification may be insufficient, making it difficult for the player to aim at the target easily. In FIG. 4B, the display controller 110 may determine that the virtual character has entered the aiming down sights mode based on the scale of the image in the default region 300 being magnified by the game application. The display controller 110 may further magnify the scale of the image in the default region 300 to make it easier for the player to aim at the target.

In an embodiment, the degree to which the image in the default region of the image signal is magnified by the display controller 110 may be inversely proportional to the degree to which the image is magnified by the game application. For example, when the virtual character aims using a 2× scope, the game application may magnify the scale of the image in the default region by 2 times. The display controller 110 may further magnify the scale of the image in the default region by 10 times through the OSD, so that the scale of the image is magnified to 20 times. On the other hand, when the virtual character aims using a 10× scope, the game application may magnify the scale of the image in the default region by 10 times. The display controller 110 may further magnify the scale of the image in the default region by 2 times through the OSD, so that the scale of the image is magnified to 20 times.

In an embodiment, the degree to which the scale of the image in the default region of the image signal is magnified by the display controller 110 when the virtual character enters the aiming down sights mode may be associated with the virtual prop. When the display controller 110 determines that a first virtual prop of the game application is enabled according to the identification result, the display controller 110 may adjust the scale of the image in the default region to a first scale. When the display controller 110 determines that a second virtual prop different from the first virtual prop is enabled according to the identification result, the display controller 110 may adjust the scale of the image in the default region to a second scale different from the first scale. For example, when the display controller 110 determines that the virtual character holds a rifle and enters the aiming down sights mode, the display controller 110 may adjust the scale of the image in the default region to 2 times through the OSD. On the other hand, when the display controller 110 determines that the virtual character holds a sniper rifle and enters the aiming down sights mode, the display controller 110 may adjust the scale of the image in the default region to 10 times through the OSD.

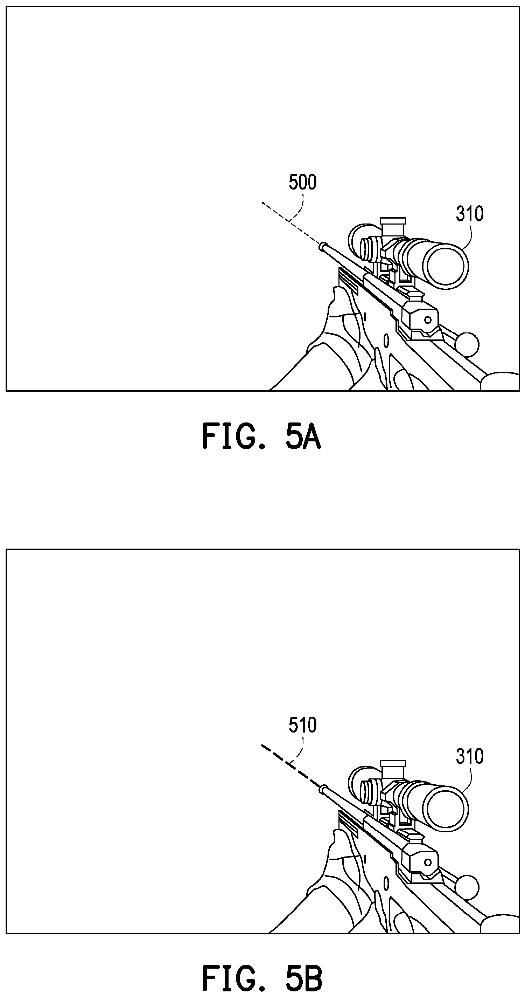

In an embodiment, the display controller 110 may determine a trajectory of an object in the image signal according to the identification result and highlight the trajectory. FIGs. 5A and 5B illustrate schematic diagrams of a ballistic trajectory 500 according to an embodiment of the disclosure. The display controller 110 may determine, according to the identification result, that the game graphics include a ballistic trajectory 500 generated by a bullet fired from the virtual prop 310. The display controller 110 may display an image 510 corresponding to the ballistic trajectory 500 in a default region of the OSD. The display controller 110 may overlay the image 510 on the ballistic trajectory 500 to achieve the purpose of highlighting the ballistic trajectory 500. For example, the display controller 110 may configure the color or line style of the image 510 to be different from the color or thickness of the ballistic trajectory 500.

To determine whether the image signal includes a ballistic trajectory, training data of the machine learning model used by the processor 130 may include image signals (or game graphics) that contain or do not contain a ballistic trajectory and labels indicating whether a ballistic trajectory is present. The processor 130 may train the machine learning model using the labeled training data.

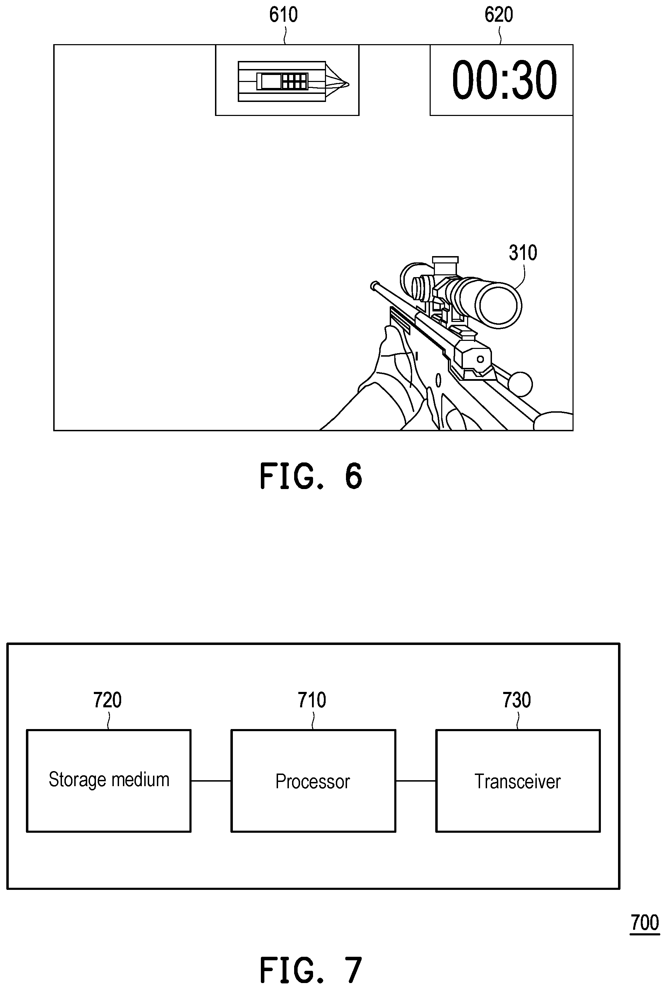

In an embodiment, the display controller 110 may determine an event prompt in the image signal according to the identification result and provide an image corresponding to the event prompt through the GUI of the OSD. FIG. 6 illustrates a schematic diagram of a bomb-setting image 610 according to an embodiment of the disclosure. The display controller 110 may determine, according to the identification result, that the image signal includes the bomb-setting image 610. Accordingly, the display controller 110 may display a countdown image 620 in a default region of the OSD (e.g., the upper right corner of the game graphics) through the GUI.

To determine whether the image signal includes a bomb-setting image, training data of the machine learning model used by the processor 130 may include image signals (or game graphics) that contain or do not contain a bomb-setting image and labels indicating whether a bomb-setting image is present. The processor 130 may train the machine learning model using the labeled training data.

The functions of the display device 100 may also be provided by an electronic device such as a personal computer or a tablet. FIG. 7 illustrates a schematic diagram of an electronic device 700 for adjusting a display content according to an embodiment of the disclosure. The electronic device 700 may include a processor 710, a storage medium 720, and a transceiver 730.

The processor 710 is, for example, a CPU, or another programmable general-purpose or special-purpose MCU, microprocessor, DSP, programmable display controller, ASIC, GPU, ISP, IPU, ALU, CPLD, FPGA, or another similar element, or a combination of the above elements. The processor 710 may be coupled to the storage medium 720 and the transceiver 730 and may access and execute multiple modules and various applications stored in the storage medium 720. The processor 710 may have the same configuration or function as the display controller 110, the bridge chip 120, and/or the processor 130.

The storage medium 720 is, for example, any type of fixed or removable random access memory (RAM), read-only memory (ROM), flash memory, hard disk drive (HDD), solid-state drive (SSD), or another similar element, or a combination of the above elements, and is used to store multiple modules or various applications executable by the processor 710.

The transceiver 730 transmits or receives signals in a wireless or wired manner. The transceiver 730 may also perform operations such as low-noise amplification, impedance matching, mixing, up or down frequency conversion, filtering, amplification, and similar operations.

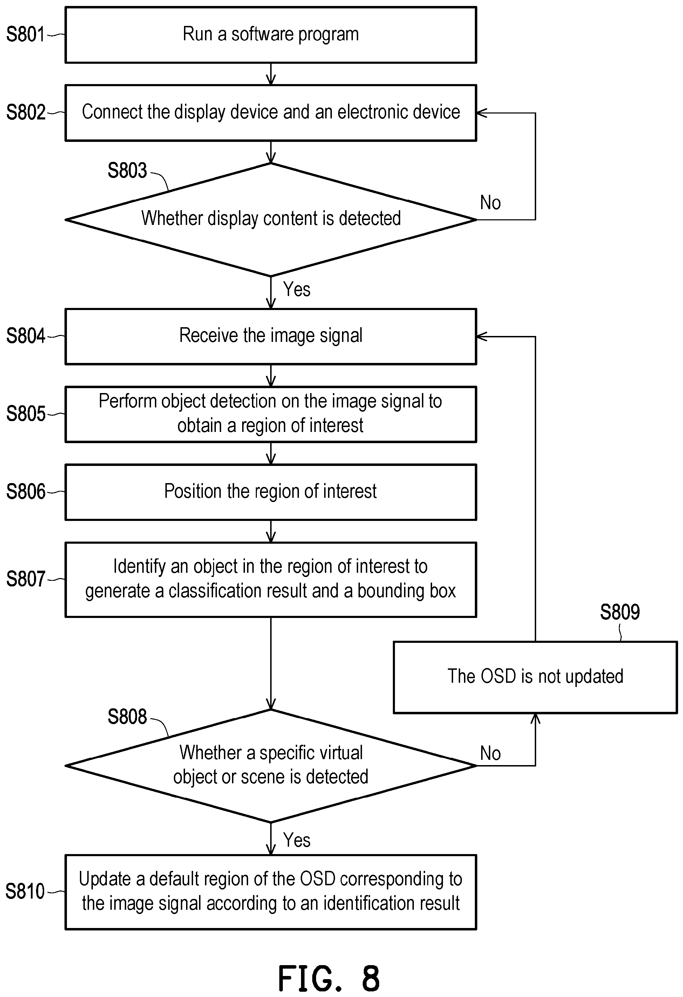

FIG. 8 illustrates a flowchart of a method applicable to the electronic device 700 according to an embodiment of the disclosure. In step S801, the processor 710 may receive a user command through the transceiver 730 to run a software program of the disclosure.

In step S802, the user may connect an input port and an output port of a display device (e.g., the display device 100) to the transceiver 730 of the electronic device 700, wherein the transceiver 730 may support communication protocols such as USB, HDMI, or DP.

In step S803, the software program may detect a display content of the display device. If the software program does not detect the display content of the display device, it indicates that the display device and the electronic device 700 may not have been successfully connected for communication. Accordingly, the software program may output a message through the transceiver 730 to instruct the user to re-execute step S802 through the message. If the software program successfully detects the display content of the display device, the process proceeds to step S804.

In step S804, the software program may receive an image signal from the display device through the transceiver 730, wherein the image signal may include game graphics of a game application. In an embodiment, if the game application is executed by the electronic device 700, the software program may also directly obtain the image signal from the game application executed by the processor 710.

In steps S805 to S807, the software program may perform an object detection on the game graphics using a machine learning model to obtain an identification result. The machine learning model used by the software program may include, for example, an R-CNN. Steps S805 to S807 are generally the same as steps S203 to S205 of FIG. 2 and will not be redundantly described.

In step S808, the software program may determine whether a specific virtual object or scene is detected according to the identification result. If the software program determines that a specific virtual object or scene is detected, then in step S810, the software program may update a default region of the OSD corresponding to the image signal according to the identification result and generate an output image through the display device, wherein the output image may include game graphics corresponding to the image signal and a graphical user interface (GUI) of the OSD in the default region overlaid on the game graphics. For example, the software program may provide the player with functions such as adjusting the magnification level of a scope or enabling a crosshair through the OSD. On the other hand, if the software program determines that a specific virtual object or scene is not detected, then in step S809, the software program may not update the OSD or may disable a function that the electronic device 700 is providing to the player.

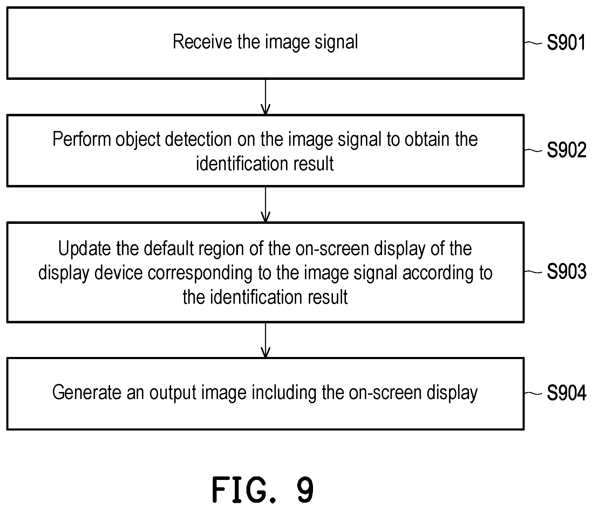

FIG. 9 illustrates a flowchart of a method for adjusting a display content according to an embodiment of the disclosure, wherein the method may be implemented by the display device 100 shown in FIG. 1 or the electronic device 700 shown in FIG. 7. In step S901, an image signal is received. In step S902, an object detection is performed on the image signal to obtain an identification result. In step S903, a default region of an on-screen display of the display device corresponding to the image signal is updated according to the identification result. In step S904, an output image including the on-screen display is generated.

In summary, the display device (or electronic device) of the disclosure may perform an object detection on an image signal of a shooting game to determine the type of virtual prop currently held by the virtual character controlled by the player or to determine whether the virtual character has entered the aiming down sights mode and may further adjust the on-screen display accordingly based on the determination result. When the virtual character aims at a target using a low-magnification scope, the display device may increase the magnification level of the scope to make it easier for the player to aim at distant targets. When the virtual character holds a firearm that does not have a crosshair (e.g., a sniper rifle), the display device may automatically display a crosshair for the player, allowing the player to aim at the target more efficiently. When the virtual character completes the bomb-setting process, the display device may provide the player with a countdown image. When the ballistic trajectory in the game graphics is not clearly visible, the display device may highlight the ballistic trajectory. The functions of adjusting the display content, such as increasing the magnification level of the scope or enabling a crosshair, provided by the disclosure may be implemented through the on-screen display of the display device. If the player is live streaming, the game graphics viewed by the audience will not be affected by the functions provided by the disclosure and will remain the same as the unadjusted game graphics.

## Claims

1. A display device (100), comprising:
a display module (140);
a bridge chip (120), receiving an image signal;
a processor (130, 710), electrically connected to the bridge chip (120); and
a display controller (110), electrically connected to the processor (130, 710) and the display module (140), wherein
the processor (130, 710) performs an object detection on the image signal to obtain an identification result, and
the display controller (110) updates a default region (300) of an on-screen display corresponding to the image signal according to the identification result and generates an output image comprising the on-screen display through the display module (140).

2. The display device (100) according to claim 1, wherein the processor (130, 710) is an artificial intelligence chip.

3. The display device (100) according to claim 1, wherein
the identification result is that the processor (130, 710) determines a virtual character in the image signal entering an aiming down sights mode; and
the display controller (110) displays a partially zoom-in image of the aiming down sights mode in the default region (300).

4. The display device (100) according to claim 3, wherein
a zoom-in level of the partially zoom-in image in the default region (300) by the display controller (110) is inversely proportional to a zoom-in level of the aiming down sights mode in the image signal.

5. The display device (100) according to claim 1, wherein
the identification result is that a first virtual prop or a second virtual prop of the image signal is enabled;
in response to determining that the first virtual prop is enabled, the display controller (110) adjusts the default region (300) to a first scale; and
in response to determining that the second virtual prop is enabled, the display controller (110) adjusts the default region (300) to a second scale different from the first scale.

6. The display device (100) according to claim 1, wherein
the display controller (110) enables or disables a crosshair (320) in the default region (300) according to the identification result.

7. The display device (100) according to claim 6, wherein
the identification result is whether a virtual prop (310) of the image signal is enabled; and
in response to determining that the virtual prop (310) is enabled, the display controller (110) enables or disables the crosshair (320).

8. The display device (100) according to claim 7, wherein
the identification result is determining that a virtual character in the image signal enters a hip firing mode or the aiming down sights mode; and
in response to determining that the virtual character enters the hip firing mode, the display controller (110) enables the crosshair (320).

9. The display device (100) according to claim 8, wherein
in response to determining that the virtual character enters the aiming down sights mode, the display controller (110) disables the crosshair (320).

10. The display device (100) according to claim 1, wherein
the processor (130, 710) performs the object detection using a region-based convolutional neural network, wherein the region-based convolutional neural network comprises a region proposal network.

11. The display device (100) according to claim 1, wherein the identification result is a ballistic trajectory (500), the display controller (110) displays an image (510) corresponding to the ballistic trajectory (500) in the default region (300) of the on-screen display, and a color of the image (510) is different from a color of the ballistic trajectory (500).

12. The display device (100) according to claim 1, wherein the identification result is a bomb-setting image (610), and the display controller (110) displays a countdown image (620) in the default region (300).

13. An electronic device (700) for adjusting a display content of a display device (100), comprising:
a transceiver (730); and
a processor (130, 710), coupled to the transceiver (730) and configured to:
receive an image signal through the transceiver (730);
perform an object detection on the image signal to obtain an identification result;
update a default region (300) of an on-screen display of the display device (100) corresponding to the image signal according to the identification result; and
generate an output image comprising the on-screen display.

14. A method for adjusting a display content of a display device (100), comprising:
receiving an image signal;
performing an object detection on the image signal to obtain an identification result;
updating a default region (300) of an on-screen display of the display device (100) corresponding to the image signal according to the identification result; and
generating an output image comprising the on-screen display.
